# EUROPEAN PATENT SPECIFICATION

(11) **EP 4 392 847 B1**
(45) Date of publication and mention of the grant of the patent: **30.07.2025**
(21) Application number: 22747864.1
(22) Date of filing: 30.06.2022
(51) Int. Cl.: G06F 1/16, G06F 3/0354

(54) **COMPUTING DEVICE WITH STYLUS RETENTION**
RECHNERVORRICHTUNG MIT STIFTHALTERUNG
DISPOSITIF INFORMATIQUE AVEC MAINTIEN DE STYLET

(30) Priority: 25.08.2021 US 202163260570 P; 19.10.2021 US 202117451444
(43) Date of publication of application: 03.07.2024
(73) Proprietor: Microsoft Technology Licensing, LLC, Redmond, WA 98052-6399 (US)
(72) Inventor: THOME, Nathan Michael, Redmond, Washington 98052-6399 (US); MCLAUGHLIN, Robyn Rebecca Reed, Redmond, Washington 98052-6399 (US); SCHOECK, Kaitlyn Marley, Redmond, Washington 98052-6399 (US); SINGLA, Aseem, Redmond, Washington 98052-6399 (US); GAULT, Joseph Benjamin, Redmond, Washington 98052-6399 (US)
(74) Representative: Page White Farrer
(86) International application number: PCT/US2022/035634
(87) International publication number: WO 2023/027809

(56) References cited:
- US-A1- 2021 099 025
- US-B1- 6 266 685

## Description

### BACKGROUND

Some electronic devices, such as laptop and tablet computers, can utilize a stylus as an input device. Storing the stylus with the electronic device can present challenges.

US 2021/099025 A1 discloses a charging system for a peripheral device, such as a stylus, including orientation control. The charging system includes charging circuitry and magnets. The magnets are configured so that they attract the peripheral device to an engagement surface when it is in a first orientation relative to the engagement surface so that charging circuitry in a peripheral device portion couples with charging circuitry in a charger portion. The magnets are configured so that they also repel and rotate the peripheral device when it is in a second orientation relative to the engagement surface.

US 6 266 685 B1 discloses a hand-held data input system having an input stylus and a data receiving pad. The data input system includes a recessed stylus holder. The recessed stylus holder receives the input stylus such that it does not protrude from the system's housing. The data input system alternatively includes a grip facilitator. The grip facilitator is located proximate the data receiving pad to make contact with a finger of a hand gripping a side of the hand-held unit.

### SUMMARY

The invention is defined by the attached set of claims. This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

A computing device comprises a base that includes a base surface configured to support the computing device on a supporting surface. A front wall adjoins and extends away from the base surface. The computing device includes a chassis that adjoins the base, with the chassis comprising a planar user interactive surface comprising one or more user input components. An overhanging brim extends beyond at least the front wall of the base and comprises at least one magnet configured to removably retain a stylus underneath the overhanging brim.

### BRIEF DESCRIPTION OF THE DRAWINGS

FIGS. 1 and 2 depict an example computing device including features for removably attaching a stylus according to examples of the present disclosure.
FIG. 3 depicts the example computing device of FIG. 1 in a tablet mode according to examples of the present disclosure.
FIG. 4 shows a side view of the computing device of FIG. 1 in a closed position according to examples of the present disclosure.
FIG. 5 schematically depicts a side view of the computing device in a laptop mode according to examples of the present disclosure.
FIG. 6 schematically depicts a side view of the computing device with its display in an intermediate position according to examples of the present disclosure.
FIG. 7 schematically depicts a side view of the computing device with its display in another intermediate position according to examples of the present disclosure.
FIGS. 8A and 8B show the computing device without a stylus docked and with a stylus docked, respectively, according to examples of the present disclosure.
FIG. 9 shows another view of the computing device with a stylus docked according to examples of the present disclosure.
FIGS. 10 and 11 schematically depict partial side views of the overhanging brim of the computing device according to examples of the present disclosure.
FIG. 12 shows a partial cross section view of the overhanging brim according to examples of the present disclosure.
FIG. 13 depicts an outer layer of the planar ceiling of the overhanging brim according to examples of the present disclosure.
FIG. 14 depicts an adhesive layer underlying the outer layer according to examples of the present disclosure.
FIG. 15 depicts a plastic shim that overlies a printed circuit board assembly, magnets, and a wireless charging component according to examples of the present disclosure.
FIG. 16 shows the printed circuit board assembly, magnets, and wireless charging component according to examples of the present disclosure.
FIG. 17 shows a cutout portion in a metallic enclosure layer that houses the printed circuit board assembly according to examples of the present disclosure.
FIGS. 18 and 19 schematically depict a bottom view of the computing device showing magnets and wireless charging components in the stylus and computing device according to examples of the present disclosure.
FIG. 20 shows the stylus docked to the computing device according to examples of the present disclosure.
FIGS. 21 - 23 schematically show a stylus being removably attached to the computing device according to examples of the present disclosure.
FIG. 24 schematically shows a stylus being automatically rotated and attached to the computing device according to examples of the present disclosure.
FIG. 25 illustrates an example method of removably attaching a stylus to a computing device according to examples of the present disclosure.
FIG. 26 is a block diagram of an example computing system according to examples of the present disclosure.

### DETAILED DESCRIPTION

Many portable computing devices, such as laptop, tablet, and dual-display computing devices, may be utilized with a stylus as an input device. Existing storage solutions for carrying a stylus with a computing device have several drawbacks. Some configurations that magnetically attach a stylus to an exterior side of a device leave the stylus vulnerable to easy dislodging in a variety of situations, such as by a user's hand contacting the stylus, or by the stylus brushing against a surface of a carrying case or bag when inserting or removing the computing device from the case or bag. Other configurations may utilize a mechanical capture feature that requires a precise motion or series of movements with a user's fingers for inserting/removing the stylus. However, such mechanisms may be inaccessible and/or particularly difficult to operate for users with compromised fine motor skills. These solutions also can consume valuable packaging space within the computing device.

Other solutions utilize a dedicated cavity or void within the computing device, which also takes up valuable real estate inside the device, and often can compromise the exterior aesthetics of the device. Still other solutions require a separate cover that is attached to the computing device, thereby increasing the weight and size of the device, and imposing additional costs upon the user. Accordingly, and to address one or more of the shortcomings of other solutions, the present disclosure describes computing devices and related methods that removably retain a stylus with the computing device in a manner that provides greater security from inadvertently dislodging the stylus, thereby enhancing portability of the device. Additionally, the computing devices and methods of the present disclosure make a stored stylus equally accessible regardless of the user's dominant hand, as well as easily accessible from any orientation or working mode of the device. As will be described in more detail below, computing devices of the present invention include an overhanging brim that comprises one or more magnets configured to removably retain the stylus underneath the overhanging brim. With these configurations, the stylus may be easily and conveniently stowed and retrieved from the overhanging brim. Further, the overhanging brim utilizes a flat, planar surface against which the stylus is retained, thereby avoiding the use of troughs, indentations, or other intrusions into the device interior which could occupy valuable component space or other interior volumes. Additionally, when a stylus is not retained against this planar surface, the computing device presents a clean, aesthetically pleasing appearance, as opposed to other stylus retention configurations that are clearly visible and sometimes unsightly when a stylus is not stowed, and thus can present an incomplete and less-pleasing appearance to a user.

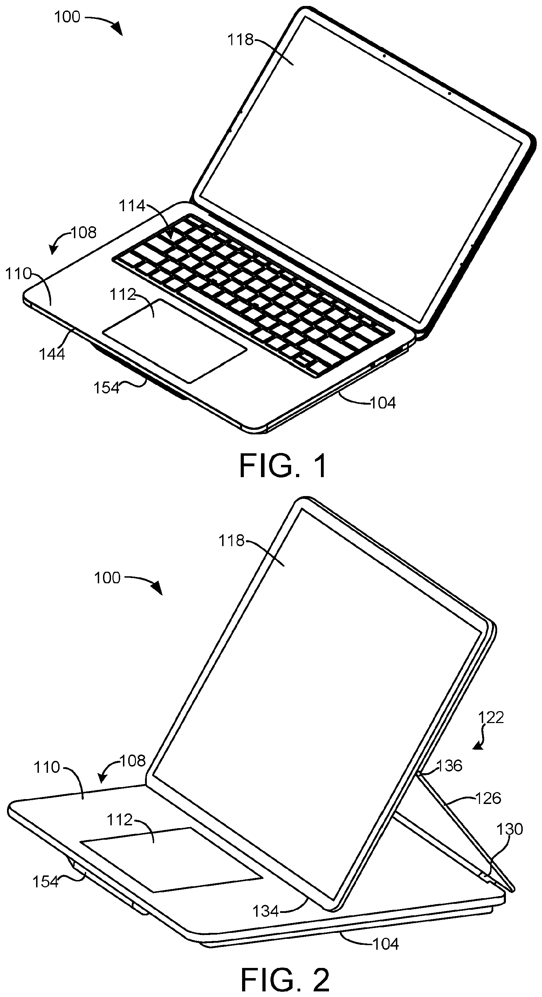

FIGS. 1-4 depict an example computing device 100 that includes stylus storage features according to aspects of the present invention.

In this example, the computing device 100 includes a base 104 and adjoining chassis 108. In some examples, the base 104 and chassis 108 may be separately fabricated enclosures that are affixed together. In other examples, the base 104 and chassis 108 may be integrally formed as a single enclosure.

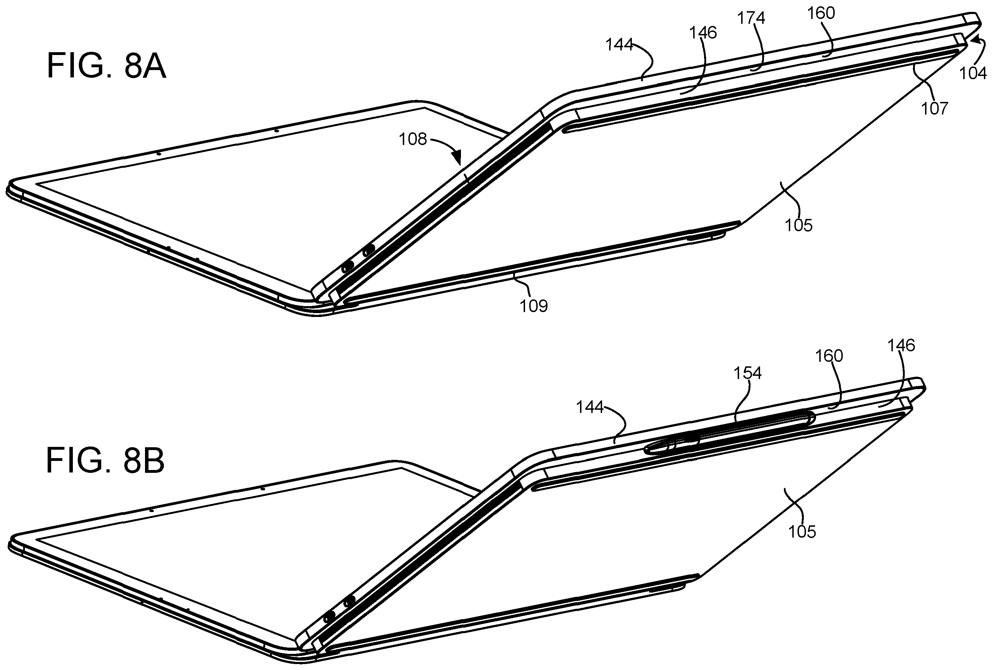

The base 104 includes a planar base surface 105 that is configured to support the computing device 100 on a supporting surface 106, such as a table, desk, a user's lap, etc. In this example and with reference also to FIGS. 8A and 8B, the base surface 105 includes two laterally extending feet 107, 109 that contact the supporting surface 106. The chassis 108 is positioned above the base 104 and includes a planar user interactive surface 110 comprising a trackpad 112 and a keyboard 114. In other examples of computing devices according to the present invention, the chassis may include a single user input component, such as a touch-sensitive display, or three of more user input components, such as a touch-sensitive display, trackpad and keyboard. For example, while computing device 100 includes trackpad 112 and keyboard 114, other computing devices utilizing stylus retention configurations of the present invention may omit either or both of these user input components, and/or include one or more other user input/output devices and other hardware components not discussed herein.

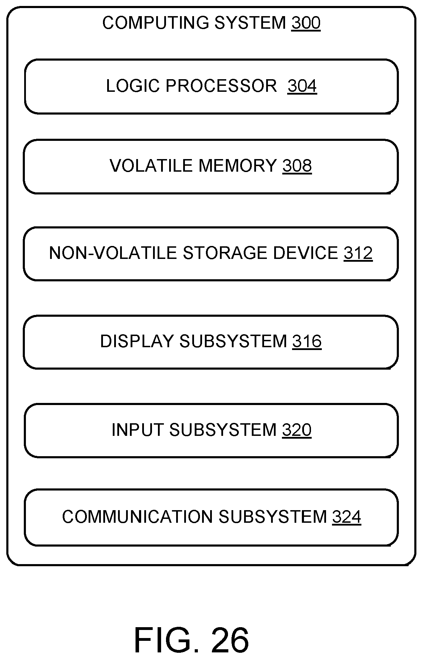

In this example, computing device 100 includes a touch-sensitive display 118 that is rotatably coupled to chassis 108 via a display positioning assembly 122. The display 118 may have any suitable size, resolution, and utilize any suitable display technology. As examples, the display 118 may be a liquid crystal display (LCD), light emitting diode (LED) display, plasma display, quantum dot display (QLED), e-ink/e-paper display, or other suitable display type. Additional details regarding the components and computing aspects of computing device 100 are described in more detail below with reference to the example computing system of FIG. 26.

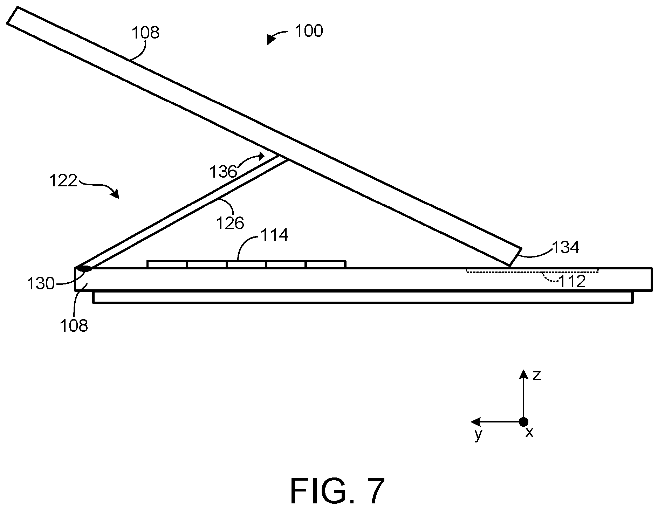

In the present example, and with reference to FIGS. 1-7, the display positioning assembly 122 enables multiple operating orientations and positionings of display 118 that provide a user with different modes of interacting with the computing device 100. As best seen in FIGS. 2 and 5-7, the display positioning assembly 122 includes a collapsible support member 126 that is rotatably connected to the chassis 108 at a hinge 130. The bottom edge 134 of display 118 is not rigidly affixed to the user interactive surface 110 of the chassis 108. Rather, the bottom edge 134 of display 118 is moveable to any of a range of securable display positions along the user interactive surface 110.

In some examples, the collapsible support member 126 is moveably coupled to the display 118 via a living hinge 136. In other examples, the collapsible support member 126 may be moveably coupled to the display portion 108 via a mechanical hinge or any other suitable coupling that enables the display portion to pivot about the support member.

Components of computing device 100 may be composed or constructed from any suitable materials. As examples, a chassis of computing device 100 may be constructed from one or more suitable plastics, metal alloys (e.g., aluminum, magnesium), ceramics, etc. Suitable paints, coatings, or finishes may optionally be applied. It will be understood that computing device 100 and example stylus retention configurations as described herein are presented as nonlimiting examples for illustrative purposes and are schematic in nature. Other computing devices and stylus retention configurations contemplated by this disclosure may have alternate shapes, sizes, dimensions, and form factors.

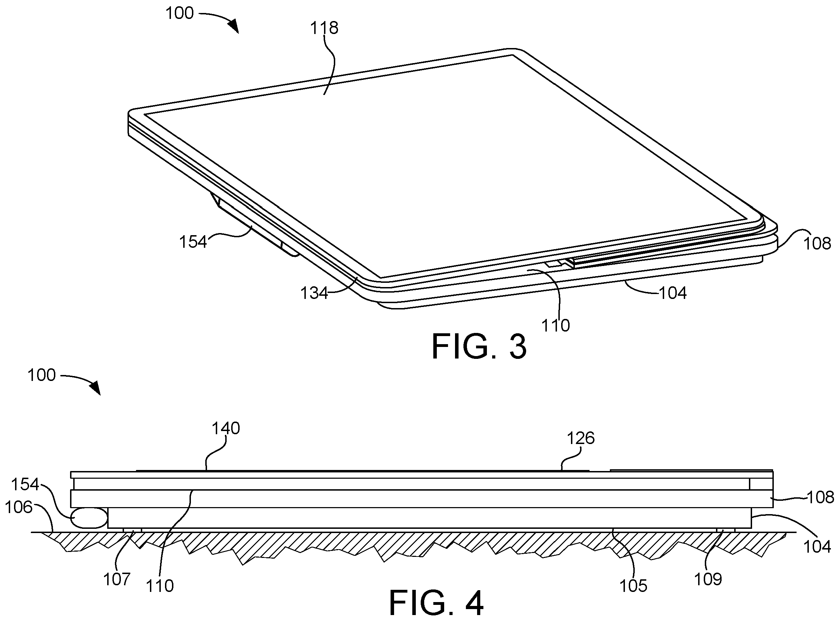

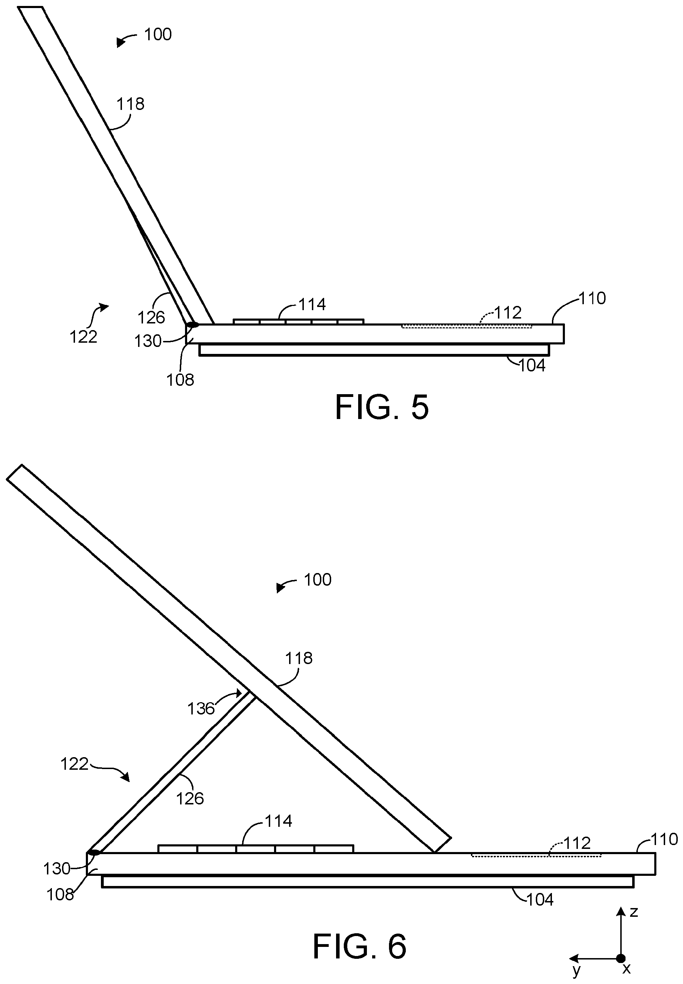

FIGS. 1 and 5 depict the computing device 100 in a laptop mode in which the display 118 is positioned relative to the chassis 108 in a manner similar to a laptop computing device. From this orientation and with reference to FIG. 4, the display 118 may be rotated about hinge 130 to a closed position in which the display 118 faces the user interactive surface 110 and a rear panel 140 of display 118 faces upwardly. With reference to FIGS. 2, 6, and 7, and as noted above, the display 118 also may be positioned in a variety of viewing orientations by rotating the display about living hinge 136 and moving the bottom edge 134 of the display to different locations along the user interactive surface 110. As shown in FIG. 3, the display 118 also may be positioned in a tablet mode in which the display rests generally parallel to the user interactive surface 110 and chassis 108 to create a tablet-like user experience.

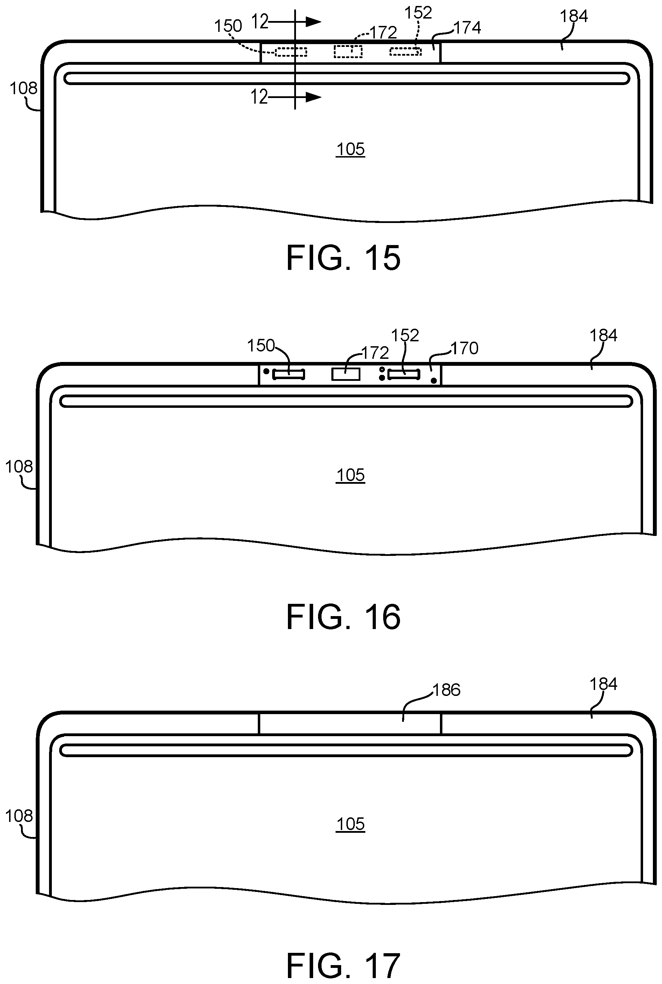

With reference now to FIGS. 8-23 and as noted above, computing devices of the present invention include an overhanging brim that comprises one or more magnets configured to removably retain the stylus underneath the overhanging brim. More particularly, and as described in more detail below, in this example the chassis 108 includes overhanging brim 144 that extends beyond a front wall 146 of the base 104 and comprises two magnets 150, 152 (see FIGS. 15 and 16) that are configured to removably retain a stylus 154 underneath the overhanging brim. The front wall 146 adjoins the base surface 105 of base 104 and extends away from the base surface.

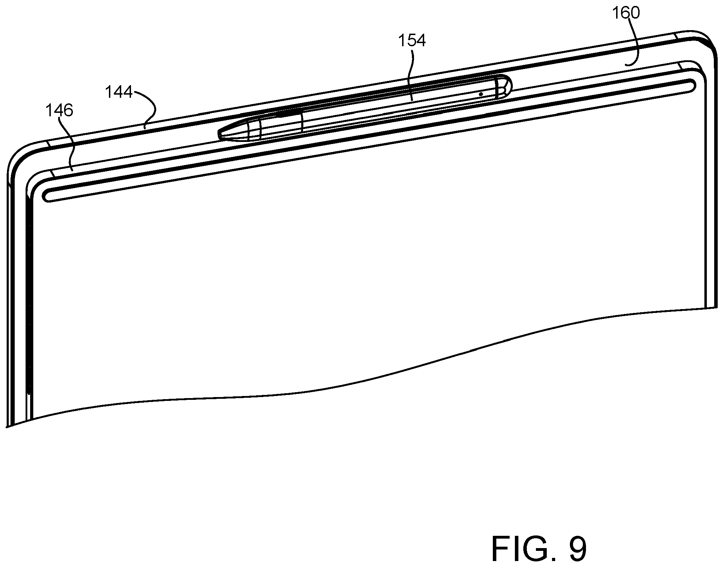

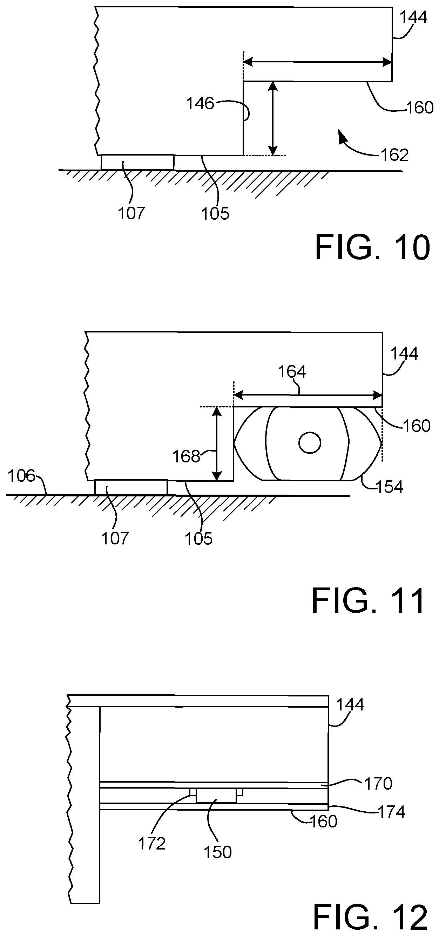

With reference to FIGS. 9 - 11, the overhanging brim 144 includes a planar ceiling 160 that forms an L-shaped capture feature 162 with the front wall 146 of the base 104. As shown in FIGS. 10 and 11, in this example the planar ceiling 160 extends perpendicularly from the front wall 146. As described further below, the two magnets 150, 152 within the overhanging brim 144 removably retain the stylus 154 against the planar ceiling 160.

As shown in FIG. 11, in this example a brim width 164 of the overhanging brim 144 is substantially equal to the stylus width of the stylus 154. Additionally, a wall height 168 of the front wall 146 of the base 104 is substantially equal to the stylus thickness of the stylus 154. Accordingly, and in one potential advantage of the present invention, coordinating these dimensions of the overhanging brim 144 and front wall 146 with corresponding dimensions of the stylus 154 can effectively protect the stylus from inadvertent contact from outside surfaces, such as a user's finger or hand, or a surface of a carrying case or bag when the computing device 100 is being inserted into or removed from the case or bag.

In other examples, and to provide additional protection from inadvertent dislodgements, the brim width 164 of the overhanging brim 144 is greater than the stylus width of the stylus 154 to further shield the stylus from unintended contact. Additionally or alternatively, to provide additional protection from inadvertent dislodgements, the wall height 168 of the front wall 146 of the base 104 is greater than the stylus thickness of the stylus 154 to further shield the stylus from unintended contact.

Advantageously and as shown in FIG. 11, this configuration also elevates the stylus 154 above the supporting surface 106 to provide the user with additional space to easily reach under the overhanging brim 144 with a finger and conveniently remove the stylus from its stowed position. Further, this configuration makes a stored stylus equally accessible regardless of the user's dominant hand, as well as easily accessible from any orientation or working mode of the device. Additionally and as described in more detail below, this configuration enables a user-friendly and highly accessible method for storing the stylus 154 by simply sliding the stylus on the supporting surface 106 and underneath the overhanging brim 144, whereby the magnets 150, 152 are configured to attract and lift the stylus into its stowed position against the planar ceiling 160.

It will also be appreciated that in other examples, computing devices of the present invention may be utilized with other styli having shapes, sizes, and cross-sectional profiles that are different from the stylus 154 depicted in these examples.

In another potential advantage of the present invention, the overhanging brim 144 is configured to at least partially shield the stylus 154 from view when the stylus is retained against the planar ceiling 160 and is viewed from above the planar user interactive surface 110. For example and as best seen in FIGS. 1 and 2, when the computing device 100 is sitting on a supporting surface with the stylus 154 stowed underneath the overhanging brim 144, a user viewing the computing device from above sees primarily the display 118, user interactive surface 110, and overhanging brim, with the stylus 154 partially occluded from view by the overhanging brim.

With reference now to FIG. 12 which shows a partial cross section view of the overhanging brim 144 taken along section line 12-12 in FIG. 15, in this example the overhanging brim 144 is an enclosure containing additional components, such as magnets 150, 152 (see also FIG. 16), printed circuit board assembly 170, and wireless charging component 172. Accordingly, and in another potential advantage of the present invention, because the overhanging brim 144 utilizes a flat, planar ceiling 160 against which the stylus is retained, it thereby avoids the use of any troughs, indentations, or other intrusions into the interior space of the brim or other areas of the computing device 100. It follows that this potentially valuable device space is preserved for other purposes, such as housing printed circuit board assembly 170, magnets 150, 152, and wireless charging component 172 in the example computing device 100. Additionally, and unlike computing devices that include troughs, indentations or other visually conspicuous features dedicated to retaining a stylus, this configuration utilizing a flat, planar ceiling 160 provides a uniform and complete appearance when a stylus 154 is not present.

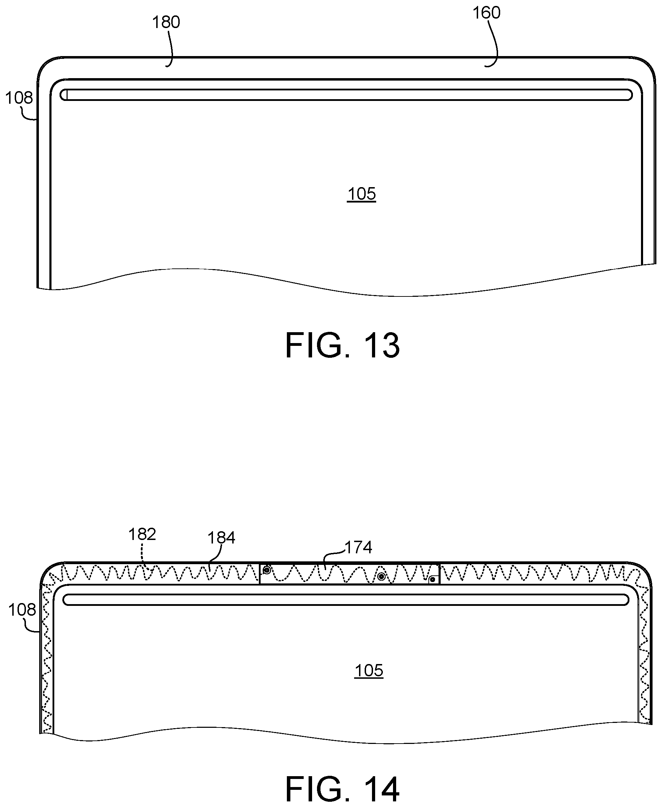

Additionally, with reference also to FIG. 15 and in another potential advantage of the present invention, the planar ceiling 160 comprises a plastic shim 174 that overlies the printed circuit board assembly 170, magnets 150, 152 and the wireless charging component 172. More particularly, and as depicted in FIGS. 13-17, the planar ceiling 160 comprises a plurality of layers that are configured to provide packaging space for the printed circuit board assembly 170, magnets 150, 152, and wireless charging component 172, while also providing a uniform visual appearance when the stylus 154 is not retained against the planar ceiling. Further, in another potential advantage and as described in more detail below, the planar ceiling 160 is fabricated to contain these components and provide this uniform visual appearance while also transmitting the magnetic fields of magnets 150, 152 and allowing for wireless charging of the stylus 154 when the stylus is retained against the planar ceiling.

FIG. 13 depicts an outer layer 180 that forms the outer surface of planar ceiling 160. In this example, the outer layer 180 continues around the sides of the chassis 108. In this example, the outer layer 180 takes the form of a plastic outer layer that advantageously allows the magnetic fields generated by the magnets 150, 152 and the wireless charging component 172, such as a wireless charging coil, to propagate through the plastic outer layer 180. The plastic outer layer 180 also hides from view the printed circuit board assembly 170 and other components located beneath the plastic outer layer as described further below.

With reference now to FIG. 14, underlying the plastic outer layer 180 is an adhesive layer, such as a pressure sensitive adhesive 182 indicated in dashed lines, that bonds the outer plastic layer to an underlying metallic enclosure layer 184. In different examples, the metallic enclosure layer 184 can be fabricated from aluminum alloys, magnesium alloys, and/or other suitable materials. With reference now to FIGS. 16 and 17, the metallic enclosure layer 184 comprises a cutout portion 186 that houses the printed circuit board assembly 170. In this example, both magnets 150 and 152 are affixed to the printed circuit board assembly 170 at spaced apart locations. The wireless charging component 172 is positioned between the magnets 150, 152. As described in more detail below, the magnets 150, 152 and wireless charging component 172 are positioned to correspond with partner magnets and a partner wireless charging component in stylus 154 to enable convenient charging of the stylus when the stylus is magnetically retained against the planar ceiling 160 by magnets 150, 152.

As noted above and depicted in FIG. 15, a plastic shim 174 is positioned within the cutout portion 186 and overlies the printed circuit board assembly 170, magnets 150, 152 and the wireless charging component 172. Advantageously, the plastic shim is positioned to be coplanar with the metallic enclosure layer 184 on either side of the cutout portion 186 to provide a substantially continuous surface across the planar ceiling 160. Further, the plastic material of the shim 174 allows transmission of the magnetic fields of magnets 150, 152 and wireless charging energy of wireless charging component 172.

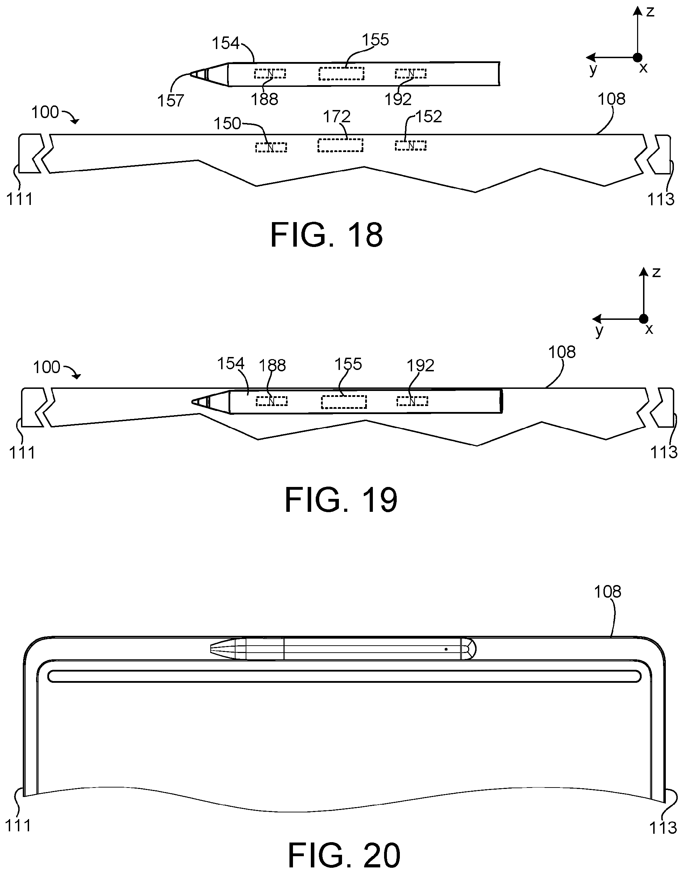

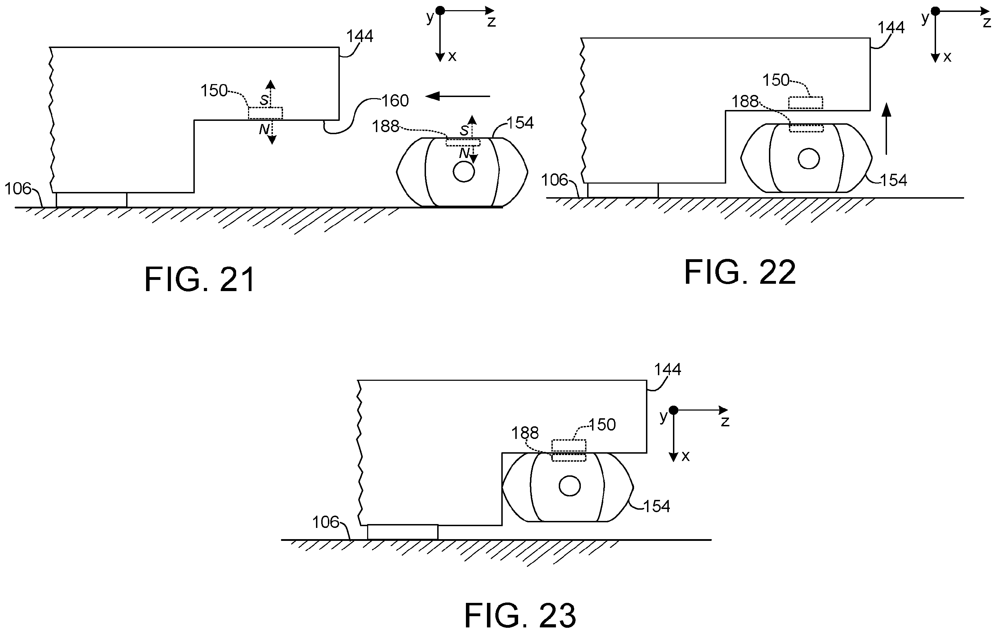

As noted above, magnets 150, 152 and wireless charging component 172 are positioned to correspond with partner magnets and a partner wireless charging component in stylus 154 to enable convenient charging of the stylus when it is magnetically retained against the planar ceiling 160 by the magnets 150, 152. In one example and with reference to FIGS. 18, 19, and 21, stylus 154 includes partner magnets 188, 192 that have a first magnetic pole orientation in which the south pole of each magnet is directed in the negative x-axis direction (see FIG. 21) and the north pole of each magnet is correspondingly directed in the positive x-axis direction. In this example the partner magnets 188, 192 are colinear and arranged along a line parallel to the longitudinal axis of the stylus 154. In other examples, the magnetic pole orientation of the partner magnets is reversed, with the magnetic pole orientations of the computing device magnets described below also reversed.

To magnetically attract the stylus 154 to a desired location on the planar ceiling 160, in the computing device the two magnets 150, 152 each have a second magnetic pole orientation that is opposite to the first magnetic pole orientation of the partner magnets 188, 192 of the stylus. In this example and as schematically shown in FIG. 21, the two magnets 150, 152 both have a second magnetic pole orientation in which the north pole of the magnet is directed in the positive x-axis direction and the south pole of the magnet is directed in the negative x-axis direction. Additionally, the two magnets 150, 152 are spaced apart by the same separation distance that separates the partner magnets 188, 192 of the stylus 154.

Accordingly, with this configuration the stylus 154 can be positioned in an attaching/charging orientation relative to the computing device 100 as shown in FIG. 18, in which the longitudinal axis of the stylus 154 is substantially parallel to the end of chassis 108, and the tip 157 of the input device points toward the first end 111 of the chassis. Accordingly, and with reference to FIGS. 19 and 20, as the stylus 154 is moved closer to the computing device 100, the magnetic fields of the partner magnets 188, 192 are attracted to the opposing magnetic fields of the two magnets 150, 152, and the stylus 154 is magnetically pulled and attached to the ceiling 160 of chassis 108 at an attaching location on the computing device as shown. Additionally, and in this example, when the stylus 154 is secured to the computing device, the partner wireless charging component 155 is aligned with and positioned directly adjacent to the computing device wireless charging component 172 to enable efficient wireless charging of the stylus 154. Additionally, this configuration of magnets conveniently allows the stylus 154 to be rotated 180 degrees and magnetically retained to the computing device 100 in a similar position in which the wireless charging component 155 is aligned with and positioned directly adjacent to the computing device wireless charging component 172 to enable efficient wireless charging.

With reference now to FIGS. 21 - 23, configurations of the present invention also enable a particularly convenient method of removably attaching a stylus to the computing device 100. With reference also to FIG. 4, the computing device 100 is set on a planar supporting surface 106 to orient the planar ceiling 160 of the overhanging brim 144 parallel to the supporting surface. The stylus 154 is also placed on the supporting surface and then is moved underneath the planar ceiling 160 of the overhanging brim 144. As the stylus 154 moves underneath the planar ceiling 160, the two magnets 150, 152 magnetically attract the stylus partner magnets 188, 192, lift the stylus off the supporting surface 106, and retain the stylus against the planar ceiling. In this manner, a user can easily and simply slide the stylus 154 underneath the overhanging brim 144 and thereby cause the computing device 100 to lift and secure the stylus to the planar ceiling 160.

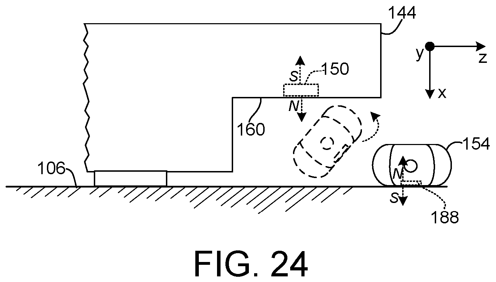

With reference now to FIG. 24, in some examples the stylus 154 may be placed on the supporting surface 106 in the opposite orientation, with the partner magnets 188, 192 adjacent to the supporting surface. In this orientation, and in another potential advantage of the present invention, when the stylus 154 is moved underneath the planar ceiling 160, the opposing polarities of the partner magnets 188, 192 and the two magnets 150, 152 in the overhanging brim 144 cause the stylus to rotate about its longitudinal axis in either a counter-clockwise direction (as illustrated) or clockwise direction and snap into place against the planar ceiling in the charging position as shown in FIG. 23. Accordingly, with this configuration the user may utilize this automatic attaching feature regardless of the orientation of the stylus 154 on the supporting surface 106.

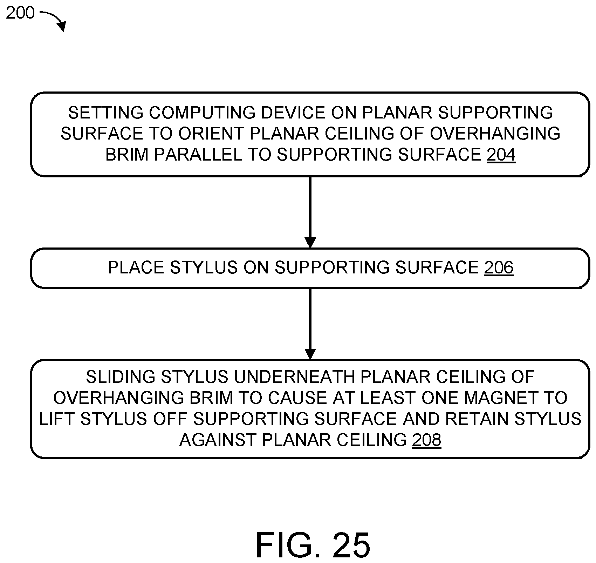

FIG. 25 illustrates an example method 200 of removably attaching a stylus to a computing device. Method 200 may be implemented using the example configurations of computing device 100 and stylus 154 as described above and other configurations as contemplated by the present disclosure. The following description of method 200 is provided with reference to the components described herein and shown in FIGS. 1-23.

It will be appreciated that the following description of method 200 is provided by way of example and is not meant to be limiting. Therefore, it is to be understood that method 200 may include additional and/or alternative steps relative to those illustrated in FIG. 25. Further, it is to be understood that the steps of method 200 may be performed in any suitable order. Further still, it is to be understood that one or more steps may be omitted from method 200 without departing from the scope of the invention.

It will also be appreciated that method 200 also may be performed in other contexts using other suitable components.

At 204, method 200 includes setting the computing device on a planar supporting surface to orient the planar ceiling of the overhanging brim parallel to the supporting surface. At 206, method 200 includes placing the stylus on the supporting surface. At 208, the method 200 includes sliding the stylus underneath the planar ceiling of the overhanging brim to cause at least one magnet to lift the stylus off the supporting surface and retain the stylus against the planar ceiling.

FIG. 26 schematically shows a non-limiting embodiment of a computing system 300 shown in simplified form. Computing system 300 may take the form of one or more styli or other input devices, personal computers, laptop computers, desktop computers, all-in-one displays, tablet computers, home-entertainment computers, gaming devices or consoles, mobile computing devices, mobile communication devices (e.g., smart phones), and/or other computing devices. In the above examples, computing device 100 and stylus 154 may comprise computing system 300 or one or more aspects of computing system 300.

Computing system 300 includes a logic processor 304, volatile memory 308, and a non-volatile storage device 312. Computing system 300 may optionally include a display subsystem 316, input subsystem 320, communication subsystem 324, and/or other components not shown in FIG. 26.

Logic processor 304 includes one or more physical devices configured to execute instructions. For example, the logic processor may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic processor 304 may include one or more physical processors (hardware) configured to execute software instructions. Additionally or alternatively, the logic processor may include one or more hardware logic circuits or firmware devices configured to execute hardware-implemented logic or firmware instructions. Processors of the logic processor 304 may be single-core or multicore, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 312 includes one or more physical devices configured to hold instructions executable by the logic processors to implement the methods and processes described herein. When such methods and processes are implemented, the state of non-volatile storage device 312 may be transformed-e.g., to hold different data.

Non-volatile storage device 312 may include physical devices that are removable and/or built-in. Non-volatile storage device 312 may include optical memory (e.g., CD, DVD, HD-DVD, Blu-Ray Disc, etc.), semiconductor memory (e.g., ROM, EPROM, EEPROM, FLASH memory, etc.), and/or magnetic memory (e.g., hard-disk drive, floppy-disk drive, tape drive, MRAM, etc.), or other mass storage device technology. Non-volatile storage device 312 may include nonvolatile, dynamic, static, read/write, read-only, sequential-access, location-addressable, file-addressable, and/or content-addressable devices. It will be appreciated that non-volatile storage device 312 is configured to hold instructions even when power is cut to the non-volatile storage device 312. Volatile memory 308 may include physical devices that include random access memory. Volatile memory 308 is typically utilized by logic processor 304 to temporarily store information during processing of software instructions. It will be appreciated that volatile memory 308 typically does not continue to store instructions when power is cut to the volatile memory 308.

Aspects of logic processor 304, volatile memory 308, and non-volatile storage device 312 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

When included, display subsystem 316 may be used to present a visual representation of data held by non-volatile storage device 312. As the herein described methods and processes change the data held by the non-volatile storage device, and thus transform the state of the non-volatile storage device, the state of display subsystem 316 may likewise be transformed to visually represent changes in the underlying data. Display subsystem 316 may include one or more display devices utilizing virtually any type of technology. Such display devices may be combined with logic processor 304, volatile memory 308, and/or non-volatile storage device 312 in a shared enclosure, or such display devices may be peripheral display devices.

When included, input subsystem 320 may comprise or interface with one or more user-input devices such as a stylus, touchpad, keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity; and/or any other suitable sensor.

When included, communication subsystem 324 may be configured to communicatively couple various computing devices described herein with each other, and with other devices. Communication subsystem 324 may include wired and/or wireless communication devices compatible with one or more different communication protocols. As non-limiting examples, the communication subsystem may be configured for communication via a wireless telephone network, or a wired or wireless local- or wide-area network, such as a HDMI over Wi-Fi connection. In some embodiments, the communication subsystem may allow computing system 300 to send and/or receive messages to and/or from other devices via a network such as the Internet.

The following paragraphs provide additional support for the claims of the subject application. One aspect provides a computing device, comprising: a base comprising: a base surface configured to support the computing device on a supporting surface; and a front wall adjoining and extending away from the base surface; and a chassis adjoining the base, the chassis comprising: a planar user interactive surface comprising one or more user input components; and an overhanging brim that extends beyond at least the front wall of the base and comprises at least one magnet configured to removably retain a stylus underneath the overhanging brim. The computing device may additionally include, wherein a planar ceiling of the overhanging brim forms an L-shaped capture feature with the front wall of the base, and the at least one magnet is configured to removably retain the stylus against the planar ceiling. The computing device may additionally include, wherein the overhanging brim is configured to at least partially shield the stylus from view when the stylus is retained against the planar ceiling and is viewed from above the planar user interactive surface. The computing device may additionally include, wherein the planar ceiling extends perpendicularly from the front wall of the base. The computing device may additionally include, wherein the planar ceiling comprises a plastic outer layer that overlies a metallic enclosure layer, the metallic enclosure layer comprising a cutout portion that houses a printed circuit board assembly. The computing device may additionally include, wherein the at least one magnet is affixed to the printed circuit board assembly. The computing device may additionally include, wherein the at least one magnet is two magnets, the computing device further comprising a wireless charging coil affixed to the printed circuit board assembly between the two magnets.

The computing device may additionally include, wherein the overhanging brim is an enclosure containing additional components. The computing device may additionally include, wherein a brim width of the overhanging brim is substantially equal to a stylus width of the stylus. The computing device may additionally include, wherein a wall height of the front wall of the base is substantially equal to a stylus thickness of the stylus. The computing device may additionally include a display rotatably coupled to the chassis. The computing device may additionally include, wherein the one or more user input components comprise a trackpad and a keyboard. The computing device may additionally include, wherein the trackpad is located between the keyboard and the overhanging brim.

Another embodiment provides a computing device, comprising: a base comprising: a base surface configured to support the computing device on a supporting surface; and a front wall adjoining and extending away from the base surface; a chassis adjoining the base, the chassis comprising: a planar user interactive surface comprising a trackpad and a keyboard; and an overhanging brim comprising a planar ceiling that extends perpendicularly from at least the front wall of the base to form an L-shaped capture feature with the front wall, the overhanging brim comprising two magnets configured to removably retain a stylus against the planar ceiling; and a display rotatably coupled to the chassis. The computing device may additionally include, wherein the planar ceiling comprises a plastic outer layer that overlies a metallic enclosure layer, the metallic enclosure layer comprising a cutout portion that houses a printed circuit board assembly. The computing device may additionally include, wherein the two magnets are affixed to the printed circuit board assembly. The computing device may additionally include a wireless charging coil affixed to the printed circuit board assembly between the two magnets. The computing device may additionally include, wherein the overhanging brim is an enclosure containing additional components. The computing device may additionally include, wherein a brim width of the overhanging brim is substantially equal to a stylus width of the stylus.

Another aspect provides a method of removably attaching a stylus to a computing device, the computing device comprising a base that comprises: a base surface configured to support the computing device on a supporting surface, and a front wall adjoining and extending away from the base surface; the computing device comprising a chassis adjoining the base, the chassis comprising: a planar user interactive surface comprising one or more user input components, and an overhanging brim comprising a planar ceiling that extends beyond at least the front wall of the base, the overhanging brim comprising at least one magnet, the method comprising: setting the computing device on a planar supporting surface to orient the planar ceiling of the overhanging brim parallel to the supporting surface; placing the stylus on the supporting surface; and sliding the stylus underneath the planar ceiling of the overhanging brim to cause the at least one magnet to lift the stylus off the supporting surface and retain the stylus against the planar ceiling.

It will be understood that the configurations and/or approaches described herein are exemplary in nature, and that these specific embodiments or examples are not to be considered in a limiting sense, because numerous variations are possible.

The claims may refer to "an" element or "a first" element or the equivalent thereof. Such claims should be understood to include incorporation of one or more such elements, neither requiring nor excluding two or more such elements.

As used herein, the phrase "and/or" means any or all of multiple stated possibilities.

## Claims

1. A computing device (100), comprising:
a base (104) comprising:
a base surface (105) configured to support the computing device (100) on a supporting surface (106); and
a front wall (146) adjoining and extending away from the base surface (105); and a chassis (108) adjoining the base (104), the chassis (108) comprising:
a planar user interactive surface (110) comprising one or more user input components (112, 114); and
an overhanging brim (144) that extends beyond at least the front wall (146) of the base (104) and comprises at least one magnet (150, 152) configured to removably retain a stylus (154) underneath the overhanging brim (144).

2. The computing device (100) of claim 1, wherein a planar ceiling (160) of the overhanging brim (144) forms an L-shaped capture feature (162) with the front wall (146) of the base (104), and the at least one magnet (150, 152) is configured to removably retain the stylus (154) against the planar ceiling (160).

3. The computing device (100) of claim 2, wherein the overhanging brim (144) is configured to at least partially shield the stylus (154) from view when the stylus (154) is retained against the planar ceiling (160) and is viewed from above the planar user interactive surface (110).

4. The computing device (100) of claim 2, wherein the planar ceiling (160) extends perpendicularly from the front wall (146) of the base (104).

5. The computing device (100) of claim 4, wherein the planar ceiling (160) comprises a plastic outer layer (180) that overlies a metallic enclosure layer (184), the metallic enclosure layer (184) comprising a cutout portion (186) that houses a printed circuit board assembly (170).

6. The computing device (100) of claim 5, wherein the at least one magnet (150, 152) is affixed to the printed circuit board assembly (170).

7. The computing device (100) of claim 6, wherein the at least one magnet (150, 152) is two magnets (150, 152), the computing device (100) further comprising a wireless charging coil (172) affixed to the printed circuit board assembly (170) between the two magnets (150, 152).

8. The computing device (100) of claim 1, wherein the overhanging brim (144) is an enclosure containing additional components.

9. The computing device (100) of claim 1, wherein a brim width of the overhanging brim (144) is substantially equal to a stylus width of the stylus (154).

10. The computing device (100) of claim 1, wherein a wall height of the front wall (146) of the base (104) is substantially equal to a stylus thickness of the stylus (154).

11. The computing device (100) of claim 1, further comprising a display (118) rotatably coupled to the chassis (108).

12. The computing device (100) of claim 1, wherein the one or more user input components (112, 114) comprise a trackpad (112) and a keyboard (114).

13. The computing device (100) of claim 1, wherein the trackpad (112) is located between the keyboard (114) and the overhanging brim (144).

14. A method (200) of removably attaching a stylus to a computing device, the computing device comprising a base that comprises: a base surface configured to support the computing device on a supporting surface, and a front wall adjoining and extending away from the base surface; the computing device comprising a chassis adjoining the base, the chassis comprising: a planar user interactive surface comprising one or more user input components, and an overhanging brim comprising a planar ceiling that extends beyond at least the front wall of the base, the overhanging brim comprising at least one magnet, the method comprising:
setting (204) the computing device on a planar supporting surface to orient the planar ceiling of the overhanging brim parallel to the supporting surface;
placing (206) the stylus on the supporting surface; and
sliding (208) the stylus underneath the planar ceiling of the overhanging brim to cause the at least one magnet to lift the stylus off the supporting surface and retain the stylus against the planar ceiling.

## Patentansprüche

1. Ein Rechengerät (100), umfassend:
eine Basis (104), umfassend:
eine Basisfläche (105), die eingerichtet ist, das Rechengerät (100) auf einer Stützfläche (106) zu stützen; und
eine Vorderwand (146), die an die Basisfläche (105) angrenzt und sich von dieser weg erstreckt; und
ein Chassis (108), das an die Basis (104) angrenzt, wobei das Chassis (108) umfasst:
eine planare benutzerinteraktive Oberfläche (110), die eine oder mehrere Benutzereingabekomponenten (112, 114) umfasst; und
einen überhängenden Rand (144), der sich über mindestens die Vorderwand (146) der Basis (104) hinaus erstreckt und mindestens einen Magneten (150, 152) umfasst, der eingerichtet ist, einen Stift (154) abnehmbar unter dem überhängenden Rand (144) zu halten.

2. Das Rechengerät (100) nach Anspruch 1, wobei eine planare Decke (160) des überhängenden Randes (144) ein L-förmiges Aufnahmemerkmal (162) mit der Vorderwand (146) der Basis (104) bildet, und der mindestens eine Magnet (150, 152) eingerichtet ist, den Stift (154) abnehmbar gegen die planare Decke (160) zu halten.

3. Das Rechengerät (100) nach Anspruch 2, wobei der überhängende Rand (144) eingerichtet ist, den Stift (154) zumindest teilweise vor Sicht zu schützen, wenn der Stift (154) gegen die planare Decke (160) gehalten wird und von oberhalb der planaren benutzerinteraktiven Oberfläche (110) betrachtet wird.

4. Das Rechengerät (100) nach Anspruch 2, wobei die planare Decke (160) sich senkrecht von der Vorderwand (146) der Basis (104) erstreckt.

5. Das Rechengerät (100) nach Anspruch 4, wobei die planare Decke (160) eine äußere Kunststoffschicht (180) umfasst, die eine Metalleinhausschicht (184) überlagert, wobei die Metalleinhausschicht (184) einen Ausschnitt (186) umfasst, der eine Leiterplattenbaugruppe (170) beherbergt.

6. Das Rechengerät (100) nach Anspruch 5, wobei der mindestens eine Magnet (150, 152) an der Leiterplattenbaugruppe (170) befestigt ist.

7. Das Rechengerät (100) nach Anspruch 6, wobei der mindestens eine Magnet (150, 152) zwei Magnete (150, 152) umfasst, und das Rechengerät (100) weiter eine drahtlose Ladespule (172) umfasst, die an der Leiterplattenbaugruppe (170) zwischen den beiden Magneten (150, 152) befestigt ist.

8. Das Rechengerät (100) nach Anspruch 1, wobei der überhängende Rand (144) ein Gehäuse ist, das zusätzliche Komponenten enthält.

9. Das Rechengerät (100) nach Anspruch 1, wobei eine Randbreite des überhängenden Randes (144) im Wesentlichen gleich einer Stiftbreite des Stifts (154) ist.

10. Das Rechengerät (100) nach Anspruch 1, wobei eine Wandhöhe der Vorderwand (146) der Basis (104) im Wesentlichen gleich einer Stiftdicke des Stifts (154) ist.

11. Das Rechengerät (100) nach Anspruch 1, weiter umfassend ein Display (118), das drehbar mit dem Chassis (108) verbunden ist.

12. Das Rechengerät (100) nach Anspruch 1, wobei die eine oder mehrere Benutzereingabekomponenten (112, 114) ein Trackpad (112) und eine Tastatur (114) umfassen.

13. Das Rechengerät (100) nach Anspruch 1, wobei das Trackpad (112) zwischen der Tastatur (114) und dem überhängenden Rand (144) angeordnet ist.

14. Ein Verfahren (200) zum abnehmbaren Befestigen eines Stifts an einem Rechengerät, wobei das Rechengerät eine Basis umfasst, die umfasst: eine Basisfläche, die eingerichtet ist, das Rechengerät auf einer Stützfläche zu stützen, und eine Vorderwand, die an die Basisfläche angrenzt und sich von dieser weg erstreckt; das Rechengerät umfassend ein Chassis, das an die Basis angrenzt, wobei das Chassis umfasst: eine planare benutzerinteraktive Oberfläche, die eine oder mehrere Benutzereingabekomponenten umfasst, und einen überhängenden Rand, der eine planare Decke umfasst, die sich über mindestens die Vorderwand der Basis hinaus erstreckt, wobei der überhängende Rand mindestens einen Magneten umfasst, wobei das Verfahren umfasst:
Aufstellen (204) des Rechengeräts auf einer planaren Stützfläche, um die planare Decke des überhängenden Randes parallel zur Stützfläche auszurichten;
Platzieren (206) des Stifts auf der Stützfläche; und
Schieben (208) des Stifts unter die planare Decke des überhängenden Randes, um den mindestens einen Magneten zu veranlassen, den Stift von der Stützfläche anzuheben und den Stift gegen die planare Decke zu halten.

## Revendications

1. Dispositif informatique (100), comprenant :
une base (104) comprenant :
une surface de base (105) configurée pour supporter le dispositif informatique (100) sur une surface de support (106) ; et
une paroi avant (146) adjacente à la surface de base (105) et s'étendant à partir de celle-ci ; et
un châssis (108) adjacent à la base (104), le châssis (108) comprenant :
une surface plane et interactive d'utilisateur (110) comprenant un ou plusieurs composants d'entrée d'utilisateur (112, 114) ; et
un rebord en surplomb (144) qui s'étend au-delà d'au moins la paroi avant (146) de la base (104), et qui comprend au moins un aimant (150, 152) configuré pour retenir de manière amovible un stylet (154) sous le rebord en surplomb (144).

2. Dispositif informatique (100) selon la revendication 1, dans lequel un plafond plan (160) du rebord en surplomb (144) forme une caractéristique de capture en forme de L (162) avec la paroi avant (146) de la base (104), et ledit au moins un aimant (150, 152) est configuré pour retenir de manière amovible le stylet (154) contre le plafond plan (160).

3. Dispositif informatique (100) selon la revendication 2, dans lequel le rebord en surplomb (144) est configuré pour au moins partiellement protéger le stylet (154) de la vue lorsque le stylet (154) est retenu contre le plafond plan (160) et vu depuis le haut de la surface plane et interactive d'utilisateur (110).

4. Dispositif informatique (100) selon la revendication 2, dans lequel le plafond plan (160) s'étend perpendiculairement à partir de la paroi avant (146) de la base (104).

5. Dispositif informatique (100) selon la revendication 4, dans lequel le plafond plan (160) comprend une couche extérieure en plastique (180) qui recouvre une couche d'enceinte métallique (184), la couche d'enceinte métallique (184) comprenant une portion découpée (186) qui abrite un ensemble carte de circuit imprimé (170).

6. Dispositif informatique (100) selon la revendication 5, dans lequel ledit au moins un aimant (150, 152) est fixé à l'ensemble carte de circuit imprimé (170).

7. Dispositif informatique (100) selon la revendication 6, dans lequel ledit au moins un aimant (150, 152) représente deux aimants (150, 152), le dispositif informatique (100) comprenant en outre une bobine de charge sans fil (172) fixée à l'ensemble carte de circuit imprimé (170) entre les deux aimants (150, 152).

8. Dispositif informatique (100) selon la revendication 1, dans lequel le rebord en surplomb (144) est une enceinte contenant des composants supplémentaires.

9. Dispositif informatique (100) selon la revendication 1, dans lequel une largeur de rebord du rebord en surplomb (144) est sensiblement égale à une largeur de stylet du stylet (154).

10. Dispositif informatique (100) selon la revendication 1, dans lequel une hauteur de paroi de la paroi avant (146) de la base (104) est sensiblement égale à une épaisseur de stylet du stylet (154).

11. Dispositif informatique (100) selon la revendication 1, comprenant en outre un affichage (118) couplé de manière rotative au châssis (108).

12. Dispositif informatique (100) selon la revendication 1, dans lequel lesdits un ou plusieurs composants d'entrée d'utilisateur (112, 114) comprennent un pavé tactile (112) et un clavier (114).

13. Dispositif informatique (100) selon la revendication 1, dans lequel le pavé tactile (112) est situé entre le clavier (114) et le rebord en surplomb (144).

14. Procédé (200) de fixation amovible d'un stylet à un dispositif informatique, le dispositif informatique comprenant une base qui comprend : une surface de base configurée pour supporter le dispositif informatique sur une surface de support, et une paroi avant adjacente à la surface de base et s'étendant à partir de celle-ci, le dispositif informatique comprenant un châssis adjacent à la base, le châssis comprenant : une surface plane et interactive d'utilisateur comprenant un ou plusieurs composants d'entrée d'utilisateur, et un rebord en surplomb comprenant un plafond plan qui s'étend au-delà d'au moins la paroi avant de la base, le rebord en surplomb comprenant au moins un aimant, le procédé consistant à :
installer (204) le dispositif informatique sur une surface de support plane pour orienter le plafond plan du rebord en surplomb parallèlement à la surface de support ;
placer (206) le stylet sur la surface de support ; et
faire glisser (208) le stylet sous le plafond plan du rebord en surplomb pour amener ledit au moins un aimant à soulever le stylet de la surface de support et à retenir le stylet contre le plafond plan.
